# EUROPÄISCHE PATENTSCHRIFT

(11) **EP 1 343 721 B1**
(45) Veröffentlichungstag und Bekanntmachung des Hinweises auf die Patenterteilung: **29.06.2005**
(21) Anmeldenummer: 01994690.4
(22) Anmeldetag: 21.11.2001
(51) Int. Cl.: C01B 33/027, C01B 33/029, B01J 8/32, H01L 31/18

(54) **VERFAHREN ZUR HERSTELLUNG VON HOCHREINEM, GRANULAREM SILIZIUM**
METHOD FOR PRODUCING HIGHLY PURIFIED, GRANULAR SILICIUM
PROCEDE POUR LA PRODUCTION DE SILICIUM TRES PUR EN GRANULES

(30) Priorität: 21.12.2000 DE 10063862
(43) Veröffentlichungstag der Anmeldung: 17.09.2003
(73) Patentinhaber: SolarWorld Aktiengesellschaft, 53113 Bonn (DE)
(72) Erfinder: METZGER, Karl-Ludwig, 51427 Bergish Gladbach (DE); MLECZKO, Leslaw, 44801 Bochum (DE); BUCHHOLZ, Sigurd, 50825 Köln (DE); SCHLICHTHÄRLE, Philipp, 51519 Odenthal (DE)
(74) Vertreter: Rau, Albrecht
(86) Internationale Anmeldenummer: PCT/EP2001/013497
(87) Internationale Veröffentlichungsnummer: WO 2002/049961

(56) Entgegenhaltungen:
- DE-A- 3 222 153
- FR-A- 1 438 252
- US-A- 4 818 495
- US-A- 4 883 687
- KYU KYU WIN ET AL: "PRESSURE FLUCTUATIONS IN A MULTI-SOLID FLUIDIZED BED" JOURNAL OF CHEMICAL ENGINEERING OF JAPAN, SOCIETY OF CHEMICAL ENGINEERS. TOKYO, JP, Bd. 27, Nr. 2, 1. April 1994 (1994-04-01), Seiten 152-157, XP000449524 ISSN: 0021-9592
- GBORDZOE E A M ET AL: "GAS-SOLID CONTACTING IN A TWO-DIMENSIONAL FLUIDIZED BED CONTAINING MOBILE INTERNALS: NON-REACTIVE TRACER STUDIES" CAN J CHEM ENG FEB 1988, Bd. 66, Nr. 1, Februar 1988 (1988-02), Seiten 158-162, XP008002226 in der Anmeldung erwähnt

## Beschreibung

Die vorliegende Erfindung betrifft ein Verfahren zur Herstellung von hochreinem, granularem Silizium durch Zersetzung eines siliziumhaltigen Gases und die Verwendung des so hergestellten elementaren Siliziums in der Photovoltaik und der Halbleitertechnologie.

Unter siliziumhaltigen Gasen werden Siliziumverbindungen oder Gemische von Siliziumverbindungen verstanden, die sich unter den erfindungsgemäßen Bedingungen aus der Gasphase unter Abscheidung von Silizium zersetzen lassen. Siliziumfreie Gase im Sinne dieser Erfindung sind solche Gase, die keine Siliziumverbindungen enthalten.

Zur Gewinnung von elementarem Silizium eines Reinheitsgrades, das dessen Verwendung in der Photovoltaik beziehungsweise in der Halbleitertechnologie erlaubt, sind Verfahren zur thermischen Zersetzung von flüchtigen Siliziumverbindungen bekannt. Solche thermischen Zersetzungen können beispielsweise in Wirbelschichtreaktoren durchgeführt werden, in denen kleine Siliziumpartikel vorgelegt und diese durch Einströmen eines geeigneten siliziumhaltigen Gases oder Gasgemisches fluidisiert werden, wobei das Gasgemisch neben siliziumhaltigen auch siliziumfreie Gase enthalten kann. Die thermische Zersetzung der flüchtigen Siliziumverbindung soll im Idealfall ausschließlich auf der Oberfläche der vorgelegten Siliziumpartikel stattfinden. Die vorgelegten kleinen Siliziumpartikeln, im folgenden Keimpartikeln genannt, bilden innerhalb des Reaktors eine große Fläche zur Abscheidung des Siliziums. Partikeln, die auf eine genügende Größe angewachsen sind, werden aus dem Reaktor entfernt und es werden neue Keimpartikeln zugegeben.

Neben der Abscheidung von Silizium auf den Partikeln kommt es jedoch bei der Zersetzung des siliziumhaltigen Gases auch zur Bildung von Siliziumstaub, der schwer zu handhaben ist und aufgrund seiner großen Oberfläche leicht kontaminiert wird. Weiter enthält der gebildete Siliziumstaub signifikante Mengen an Wasserstoff, was einen anschließenden Aufschmelzprozess behindert. Aus diesem Grund ist die Staubbildung unerwünscht. Unter Siliziumstaub werden dabei Siliziumpartikel mit einem Partikeldurchmesser von bis zu ca. 25 µm verstanden.

Es ist bekannt, dass im Falle der Zersetzung von siliziumhaltigen Gasen in Wirbelschichtreaktoren ein überwiegender Anteil des Staubes in einer homogenen Reaktion gebildet wird. Diese Reaktion läuft überwiegend in der sogenannten Blasenphase ab. Das dort durch die Zersetzung des siliziumhaltigen Gases gebildete Silizium führt nicht durch Abscheidung (Chemical Vapour Deposition CVD) auf vorgelegte Keimpartikel zu einem Anwachsen der Keimpartikel, sondern bildet Staub, der aus dem Reaktor ausgetragen wird.

Aus der US 4,818, 495 A ist ein Verfahren zur Herstellung von Siliziumpartikeln durch thermische Zersetzung eines siliziumhaltigen Gases in einer Wirbelschicht bekannt. Dort werden in die Wirbelschicht Silizium-Keimpartikel eingebracht, auf denen sich das durch Zersetzen gebildete Silizium ablagert.

Prinzipiell eignen sich zur Verkleinerung von Gasblasen in einer Wirbelschicht und damit zur Verkleinerung der Blasenphase sogenannte Blasenbrecher. Unterschiedliche Vorrichtungen, die eine blasenbrechende Funktion ausüben, sind bekannt, beispielsweise vertikale und horizontale Gasverteilerplatten, geometrische Konstruktionen, wie Röhrenkombinationen und dreidimensionale Gitter, und Packungen (Füllkörper, Drähte etc.). Diese Vorrichtungen haben in Wirbelschichten und insbesondere unter den aggressiven Reaktionsbedingungen bei der thermischen Zersetzung eines siliziumhaltigen Gases den Nachteil, dass die intensive radiale und axiale Vermischung gemindert werden kann und dass eine starke Erosion der Vermischung gemindert werden kann und dass eine starke Erosion der Einbauten zu erwarten ist. Die starke mechanische Beanspruchung schränkt die Anzahl geeigneter Werkstoffe für die Einbauten ein. Darüber hinaus muss insbesondere im Hinblick auf die hohe Reinheitsforderung, die mit der gewünschten Verwendung des hergestellten Siliziums im Halbleiter- bzw. Photovaltaikbereich einhergeht, sichergestellt werden, dass durch die Blasenbrecher keine Verunreinigungen in das Silizium gelangen. Eine Silizumabscheidung auf den blasenbrechenden Elementen führt zu einem Zuwachsen des Reaktors. Die Konstruktion und das Scale-up solcher Blasenbrecher sind schwierig.

Die Aufgabe der vorliegenden Erfindung bestand nun darin, eine Verfahrensführung für die Herstellung von hochreinem, für die Verwendung in der Photovolatik und Elektronik geeignetem Silizium zu entwickeln, die eine minimale Bildung von Staub durch eine Minimierung der homogenen Reaktion erlaubt.

Gegenstand der Erfindung ist ein Verfahren zur Herstellung von granularem Silizium durch thermische Zersetzung eines siliziumhaltigen Gases in einer Wirbelschicht, wobei die Zersetzung in Gegenwart von frei fließenden, mobilen Elementen durchgeführt wird.

Die Verwendung von frei fließenden, mobilen Elementen als Blasenbrecher in einer Wirbelschicht ist prinzipiell bekannt (E.A.M. Gbordzoe, H. Littman, M.A. Bergougnou, *Canadian Journal of Chemical Engineering,* 66, 1998, 158-162). Solche Elemente sind bisher jedoch nur für die Verwendung bei heterogen katalysierten Gasphasenreaktionen bekannt. Diese mobilen Elemente erhöhen den Stofftransport, fließen aber mit den Partikeln in der Wirbelschicht und sind so der Erosion nicht so stark ausgesetzt wie fixe Einbauten.

Aus der DE 32 22 153 A1 ist die Herstellung von Aktivkohle im Rahmen einer Gas-/Feststoffreaktion in einem Wirbelbett beschrieben. Als Blasenbrecher dienen dort Hohlkugeln als mobile Elemente.

Bei einem Einsatz solcher frei fließenden, mobilen Elementen in einem Verfahren zur Herstellung von granularem Silizium kommt es zur Abscheidung von Silizium auf den Elementen, so dass sich die Größe und die Dichte der frei fließenden, mobilen Elemente während der Reaktion ändert. Zu große Elemente mit einer zu hohen Dichte sinken durch Segregation zu Boden und üben keinen Effekt mehr auf die Blasengröße aus. Darüber hinaus war zu befürchten, dass das hergestellte Silizium durch eine Diffusion von Verunreinigungen aus den Elementen kontaminiert würde.

Überraschenderweise eignen sich frei fließende, mobile Elemente dennoch für den Einsatz im erfindungsgemäßen Verfahren und führen zu einer deutlichen Verringerung des Anteils an gebildetem Staub ohne sich durch Verunreinigung des Produkts oder durch Verminderung des Umsatzes negativ auszuwirken.

Um die Wirksamkeit der frei fließenden, mobilen Elemente auch bei längerer Reaktionszeit zu gewährleisten, wird in einem separaten Verfahrensschritt Silizium, das sich während der Zersetzung des siliziumhaltigen Gases auf den frei fließenden, mobilen Elemente abgeschieden hat, durch Reaktion mit Halogenwasserstoffen, Halogenen, Alkylhalogeniden, Arylhalogeniden oder Kombinationen von Halogen und/oder Halogenwasserstoff und/oder oxidierenden mineralischen Säuren oder durch Abkühlen oder Erhitzen der frei fließenden, mobilen Elemente entfernt.

Das erfindungsgemäße Verfahren kann in verschiedenen Reaktortypen durchgeführt werden, solange sich im Reaktor ein fluidisierter Zustand der Feststoffpartikel ausbildet. Geeignete Reaktoren sind bereits bekannt. Beispielhaft seien hier Reaktoren mit einem blasenbildenden oder turbulenten Wirbelbett genannt. Das Verfahren lässt sich beispielsweise kontinuierlich oder diskontinuierlich durchführen. Bevorzugt ist die kontinuierliche Vorgehensweise. Der Austrag der durch Abscheidung gebildeten Siliziumpartikel aus dem Reaktor kann kontinuierlich oder diskontinuierlich erfolgen.

Als siliziumhaltiges Gas kommen Silane, Siliziumiodide und Halosilane des Chlors, Broms und Iods in Frage. Es können auch Gemische der genannten Verbindungen verwendet werden. Dabei ist es unerheblich, ob die Siliziumverbindung bei Raumtemperatur bereits gasförmig ist oder zunächst in den Gaszustand überführt werden muss. Die Überführung in den Gaszustand kann beispielsweise thermisch erfolgen. Bevorzugt werden Silane eingesetzt. Beispielhaft seien SiH₄, Si₂H₆, Si₃H₈, Si₄H₁₀ und Si₆H₁₄ genannt. Besonders bevorzugt ist SiH₄.

Es ist möglich, das erfindungsgemäße Verfahren zur Herstellung hochreinen, granularen Siliziums unter Zugabe eines siliziumfreien Gases oder einer Mischung mehrerer siliziumfreier Gase durchzuführen. Beispielsweise kann die zugesetzte Menge an siliziumfreiem Gas 0 bis 98 Vol.-% bezogen auf das insgesamt zugeführte Gas*,* betragen. Es ist jedoch auch möglich, auf den Zusatz eines siliziumfreien Gases zu verzichten.

Geeignete siliziumfreie Gase sind beispielsweise die Edelgase, Stickstoff und Wasserstoff, wobei die siliziumfreien Gase einzeln oder in beliebiger Kombination eingesetzt werden können. Bevorzugt sind Stickstoff und Wasserstoff, besonders bevorzugt ist Wasserstoff.

Die Temperatur kann im Temperaturbereich von 300°C bis 1400°C variiert werden. Sie muss jedoch so hoch sein, dass die Zersetzung des siliziumhaltigen Gases gewährleistet ist und darf die Schmelztemperatur des hergestellten Siliziums nicht überschreiten. Bei Verwendung von SiH₄ liegt der vorteilhafte Temperaturbereich zwischen 500°C und 1400°C. Bevorzugt ist eine Zersetzungstemperatur von 600°C bis 1000°C, besonders bevorzugt 620°C bis 800°C. Bei Verwendung von SiI₄ liegt der entsprechende Bereich zwischen 850°C und 1250°C, bei anderen Halosilanen zwischen 500°C und 1400°C.

Das erfindungsgemäße Verfahren wird in einer Wirbelschicht durchgeführt. Dazu werden im Reaktionsraum Feststoffpartikel, im weiteren Partikel genannt, vorgelegt. Die Partikel können absatzweise oder auch kontinuierlich von außen zugeführt werden. Als Partikel können jedoch auch solche Partikel Verwendung finden, die im Reaktionsraum generiert werden. Die Partikel bilden ein Festbett, durch das das zugeführte Gas eingeströmt wird. Die Einströmgeschwindigkeit des zugeführten Gases wird so eingestellt, dass das Festbett fluidisiert wird und sich eine Wirbelschicht ausbildet. Die entsprechende Vorgehensweise ist dem Fachmann an und für sich bekannt. Die Einströmgeschwindigkeit des zugeführten Gases muss mindestens der Lockerungsgeschwindigkeit (auch Minimumfluidisierungsgeschwindigkeit u_{mf}) entsprechen. Unter Lockerungsgeschwindigkeit wird dabei die Geschwindigkeit verstanden, mit der ein Gas durch ein Bett aus Partikeln strömt und unterhalb derer das Festbett erhalten bleibt, d.h. unterhalb derer die Bettpartikel weitgehend unbewegt bleiben. Oberhalb dieser Geschwindigkeit beginnt die Fluidisierung des Betts, d.h. die Bettpartikel bewegen sich und es bilden sich erste Blasen.

Die Einströmgeschwindigkeit des zugeführten Gases beträgt vorzugsweise die einbis zehnfache, besonders bevorzugt die eineinhalb- bis siebenfache Lockerungsgeschwindigkeit. Vorteilhaft werden Partikel eingesetzt, die einen Durchmesser von 50 bis 5000 µm aufweisen.

Bei den verwendeten Partikeln handelt es sich vorzugsweise um Siliziumpartikel. Vorteilhafter Weise haben diese Siliziumpartikel die Reinheit, die auch für das hergestellte hochreine, granulare Silizium gewünscht wird. Es ist aber auch möglich, Siliziumpartikel mit bestimmten Dotierungen einzusetzen, wenn dotiertes Material gewünscht wird. Es eignen sich auch Partikel, die nicht aus Silizium bestehen, solange sie unter den Reaktionsbedingungen stabil sind.

Als frei fließende, mobile Elemente zur Blasenteilung und Intensivierung des Gas/Feststoffkontakts werden vorzugsweise Elemente mit einer Dichte zwischen 1.0 g·cm⁻³ und 5 g·cm⁻³, besonders bevorzugt 1.1 bis 2.6 g·cm⁻³ eingesetzt. Die Dichte der frei fließenden, mobilen Elemente muss dabei mindestens so groß wie die Dichte der Emulsionsphase sein.

Die frei fließenden, mobilen Elemente weisen vorzugsweise einen mittleren Durchmesser auf, der im Vergleich zum mittleren Partikeldurchmesser der in der Wirbelschicht befindlichen Partikeln mindestens um eine Größenordnung größer ist.

Die frei fließenden, mobilen Elemente können beispielsweise eine kugelförmige, ellipsoide, zylinder- oder scheibenförmige, symmetrische oder unsymmetrische oder eine unregelmäßige äußere Form haben.

Die frei fließenden, mobilen Elemente können im Inneren massiv, porös oder hohl sein. Bei der Verwendung von hohlen Elementen kann die Dichte der frei fließenden, mobilen Elemente durch Befüllen mit einem Feststoff eingestellt werden. Bei einer hohlen Ausführung können die Elemente zwar beschädigt werden, sich mit Bettmaterial füllen und sinken, durch die Beschichtung mit Silizium werden sie aber mechanisch stabilisiert. Bevorzugt sind die eingesetzten frei fließenden, mobilen Elemente hohl oder porös.

Für die frei fließenden, mobilen Elemente sind verschiedene Materialien geeignet. Es muss jedoch gewährleistet sein, dass die Elemente gegenüber der mechanischen Beanspruchung in der Wirbelschicht stabil sind. Geeignete Materialien sind beispielsweise Silizium, metallische Werkstoffe, z.B. Edelstahl, nichtmetallische Werkstoffe, keramische Werkstoffe oder Verbundwerkstoffe.

Da die frei fließenden, mobilen Elemente im Reaktor schnell mit einer Siliziumschicht überzogen werden, erreichen sie schnell eine ähnliche Abrasionsfestigkeit wie das gebildete Silizium, es können daher auch Materialien wie beispielsweise Graphit eingesetzt werden.

Besonders bevorzugt werden die Elemente aus einem Werkstoff ausgeführt, der das Silizium nicht verunreinigt. Geeignete Werkstoffe sind beispielsweise Quarzglas, Graphit, Siliziumcarbid oder Silizium oder Keramik- bzw. Verbundwerkstoffe.

Es hat sich gezeigt, dass sich frei fließende, mobile Elemente aus Materialien mit einer genügenden Reinheit und einer Dichte oberhalb der Dichte der Emulsionsphase, wobei darunter die feststoffreiche Phase in einer Wirbelschicht zu verstehen ist, und unterhalb der Dichte der in der Wirbelschicht vorliegenden Partikeln dazu eignen, die Größe der sich in der Wirbelschicht ausbildenden Gasblasen wesentlich zu erniedrigen. Auf diese Art wird der Reaktionsraum für die hauptsächlich im Blasenvolumen ablaufende Zersetzung des siliziumhaltigen Gases zu Siliziumstaub minimiert. Weiter führt das Zerteilen der Blasen dazu, dass Siliziumpartikel durch den Bereich hoher Konzentrationen an durch die homogene Zersetzung des siliziumhaltigen Gases gebildeten Staubs "regnen" und so dieser Staub auf der Oberfläche der Partikeln zementiert wird, ein Vorgang, der in der Literatur "Scavenging" genannt wird.

Vorzugsweise wird im erfindungsgemäßen Verfahren in einem separaten Verfahrensschritt Silizium, das sich während der Zersetzung des siliziumhaltigen Gases auf den frei fließenden, mobilen Elemente abgeschieden hat, entfernt.

Zur Entfernung des bei der Reaktion aufgewachsenen Siliziums können die frei fließenden, mobilen Elemente beispielsweise durch Segregation am Boden des Reaktors gesammelt und ausgeschleust werden. Die Elemente können dann extern regeneriert werden, indem das Silizium durch eine chemische Reaktion abgebaut wird. Geeignete Reaktionen sind beispielsweise die Umsetzungen mit Halogenwasserstoffen, z.B. HF, HCl, HBr, HI oder Halogenen, z.B. F₂, Cl₂, Br₂, I₂. Denkbar ist auch die Umsetzung des Siliziums mit einer Mischung aus Halogen und/oder Halogenwasserstoff und/oder einer oxidierenden mineralischen Säure, beispielsweise HNO₃. Eine geeignete Art des Siliziumabbaus stellt auch die Umsetzung mit Alkylhalogeniden, z.B. CH₃Cl, oder Arylhalogeniden dar. Diese Umsetzungen können, je nach Reaktionsart, bei Temperaturen zwischen Raumtemperatur und 1200°C durchgeführt werden. Dem Reaktionsgas bzw. der Reaktionsmischung kann ein inertes Gas, z.B. Stickstoff oder ein Edelgas, oder eine Mischung mehrerer inerter Gase zugemischt werden.

Es ist auch möglich, die Regenerierung der frei fließenden, mobilen Elemente in-situ durchzuführen. Dazu kann beispielsweise so vorgegangen werden, dass die frei fließenden, mobilen Elemente zunächst durch Segregation am Boden des Reaktors gesammelt werden. Anschließend wird beispielsweise Halogenwasserstoff, Halogen, Alkylhalogenide, Arylhalogenide oder eine Mischung aus Halogen und/oder Halogenwasserstoff und/oder einer oxidierenden mineralischen Säure von unten in den Reaktor eingeleitet. Die Zugabegeschwindigkeit wird dabei vorzugsweise so eingestellt, dass das zugeführte Reaktionsmittel in dem Bereich vollständig abreagiert, in dem sich die frei fließenden, mobilen Elemente angesammelt haben. So wird verhindert, dass es zu einer unerwünschten Abreaktion der gebildeten Siliziumgranalien kommt.

Zur Entfernung des bei der Reaktion auf den frei fließenden, mobilen Elementen aufgewachsenen Siliziums kann auch ausgenutzt werden, dass das auf den frei fließenden, mobilen Elementen abgeschiedene Silizium in der Regel einen anderen thermischen Ausdehnungskoeffizienten als die frei fließenden, mobilen Elemente selbst aufweist. So kann beispielsweise ein Abkühlen oder Erhitzen der Elemente durchgeführt werden, wobei es aufgrund der unterschiedlichen thermischen Ausdehnungskoeffizienten zu einem Abplatzen des Siliziums kommt.

Es ist natürlich auch möglich, zur Entfernung des bei der Reaktion auf den frei fließenden, mobilen Elementen aufgewachsenen Siliziums eine Kombination der genannten Maßnahmen durchzuführen.

Eine bevorzugte Ausführungsform des erfindungsgemäßen Verfahrens besteht in einer Kombination der beiden beschriebenen Verfahrensschritte. Im ersten Schritt erfolgt die thermische Zersetzung eines siliziumhaltigen Gases in einer Wirbelschicht in Gegenwart von frei fließenden, mobilen Elementen. Hierbei scheidet sich Silizium auf diesen Elementen ab. Ist soviel Silizium auf den Elementen abgeschieden, dass deren Funktion beeinträchtig wird, so werden diese in-situ oder extern durch eine Abreaktion des gebildeten Siliziums, z.B. durch den Kontakt mit Halogenen, Halogenwasserstoffen, Aryl- oder Alkylhalogeniden oder durch thermische Behandlung regeneriert.

Das nach dem erfindungsgemäßen Verfahren hergestellte Silizium eignet sich insbesondere zu einer Verwendung in der Photovoltaik und zur Herstellung von elektronischen Bauteilen.

Im Folgenden wird das erfindungsgemäße Verfahren anhand beispielhafter Betriebszustände diskutiert und mit Beispielen illustriert, wobei die Beispiele jedoch nicht als Einschränkung des Erfindungsgedankens zu verstehen sind.

Alle angegebenen Druckwerte sind absolute Druckwerte. Unter den angegebenen Druckwerten ist der, in Strömungsrichtung gesehen, hinter der Wirbelschicht herrschende Druck zu verstehen, wenn dies nicht anders angegeben wird.

### Beispiele

### Beispiel 1

Einfluss der Anwesenheit von frei fließenden, blasenbrechenden Elementen auf die Pyrolyse von Silan in einer Wirbelschicht.

In einem Wirbelschichtreaktor (Durchmesser = 52,4 mm, Höhe mit expandiertem Kopf = 1600 mm) wurden 890 g Siliziumpartikeln mit einem mittleren Durchmesser von 349 µm vorgelegt. Die Experimente wurden bei einem Druck von 1150 mbar durchgeführt. Nach dem Anfahren und Aufheizen des Wirbelbettes auf eine Temperatur von 680°C in Wasserstoff wurde die Silankonzentration (SiH₄) am Eingang des Reaktors von 0 auf 10 Vol.-%, bezogen auf das Fluidisierungsgas Wasserstoff eingestellt. Das Verhältnis von Gasgeschwindigkeit u des zugeführten Gases zur Minimumfluidisierungsgeschwindigkeit u_{mf} lag bei u/u_{mf}= 5.

In einem Versuch ohne frei fließende, mobile Elemente wurden unter den angegebenen Bedingungen 207 Normalliter Silan zersetzt. In einem zweiten Versuch mit Zugabe von 41 frei fließenden, mobilen Elementen aus Quarz (Hohlzylinder, Länge = 8 mm, Durchmesser = 6-8 mm, Dichte ρ = 1,1-1,3 g·cm⁻³) wurden 201 Normalliter Silan zersetzt. In Tabelle 1 ist vergleichend der Umsatz und die Selektivität zur Staubbildung angegeben, wobei die Werte, die bei der Versuchsführung in Gegenwart von frei fließenden, mobilen Elementen aus Quarz erhalten wurden, auf 100 % festgelegt und die anderen Werte darauf bezogen wurden. Der Umsatz liegt mit 0,4 Prozentpunkten nur geringfügig höher, es wird aber eine um 7,9 Prozentpunkte niedrigere Staubselektivität erhalten.

**Tabelle 1**

| | Normalisierter Umsatz, % | Normalisierte Selektivität zu Staub, % |
|---|---|---|
| Mit Quarzelementen | 100 | 100 |
| Ohne zusätzliche Elemente | 99,6 | 107,9 |

Das Beispiel illustriert deutlich den positiven Einfluss der frei fließenden, mobilen Elemente auf die Verminderung der Staubselektivität. Auf den 41 verwendeten Quarzelementen hatte sich 0.13 g Silizium abgeschieden. Die geringe Menge abgeschiedenen Siliziums ist auf die kurze Versuchszeit und den geringen Anteil der Oberfläche der Quarzelemente an der Siliziumoberfläche im Bett zurückzuführen.

### Beispiel 2

Abreaktion des gebildeten Siliziums mit Chlorwasserstoff.

18 der frei fließenden, mobilen Elemente aus Quarz, die nach Durchführung von Beispiel 1 mit einer geschlossenen Siliziumschicht überzogenen waren, wurden durch Klassierung aus der Wirbelschicht abgetrennt und in einem zweiten Reaktor (Festbett) aus Quarz bei einer Temperatur von 470°C für 20 Minuten und 485°C für 16 Minuten mit einer Mischung aus Chlorwasserstoff und Stickstoff im Molverhältnis von 0,33:1 beschickt. Nach dem Inertisieren und Abkühlen wurden die Quarzelemente aus dem Reaktor entfernt. Eine Massendifferenz im Vergleich zu den frischen Kugeln konnte im Bereich der Messgenauigkeit (± 10⁻⁵ g) nicht festgestellt werden.

## Patentansprüche

1. Verfahren zur Herstellung von granularem Silizium durch thermische Zersetzung eines siliziumhaltigen Gases in einer Wirbelschicht, **dadurch gekennzeichnet, dass** die Zersetzung in Gegenwart von frei fließenden, mobilen Elementen durchgeführt wird, wobei
in einem separaten Verfahrensschritt Silizium, das sich während der Zersetzung des siliziumhaltigen Gases auf den frei fließenden, mobilen Elementen abgeschieden hat, durch Reaktion mit Halogenwasserstoffen, Halogenen, Alkylhalogeniden, Arylhalogeniden oder Kombinationen von Halogen und/oder Halogenwasserstoff und/oder oxidierenden mineralischen Säuren entfernt wird.

2. Verfahren zur Herstellung von granularem Silizium durch thermische Zersetzung eines siliziumhaltigen Gases in einer Wirbelschicht, **dadurch gekennzeichnet, dass** die Zersetzung in Gegenwart von frei fließenden, mobilen Elementen durchgeführt wird, wobei
in einem separaten Verfahrensschritt Silizium, das sich während der Zersetzung des siliziumhaltigen Gases auf den frei fließenden, mobilen Elementen abgeschieden hat, durch Abkühlen oder Erhitzen der frei fließenden, mobilen Elemente entfernt wird.

3. Verfahren nach Anspruch 1 oder 2, **dadurch gekennzeichnet, dass** die Wirbelschicht aus Siliziumpartikeln mit einem Durchmesser zwischen 50 und 5000 µm besteht, die vom zugeführten Gas derart durchströmt werden, das die Siliziumpartikeln fluidisiert werden und sich die Wirbelschicht ausbildet.

4. Verfahren nach wenigstens einem der Ansprüche 1 bis 3, **dadurch gekennzeichnet, dass** als siliziumhaltiges Gas ein Silan verwendet wird.

5. Verfahren nach wenigstens einem der Ansprüche 1 bis 4, **dadurch gekennzeichnet, dass** als siliziumhaltiges Gas SiH₄ verwendet und bei Temperaturen von 500 bis 1400°C gearbeitet wird.

6. Verfahren nach wenigstens einem der Ansprüche 1 bis 5, **dadurch gekennzeichnet, dass** die Gasstromgeschwindigkeit des zugeführten Gases im Verhältnis zur Lockerungsgeschwindigkeit Werte von 1 bis 10 annimmt.

7. Verfahren nach wenigstens einem der Ansprüche 1 bis 6, **dadurch gekennzeichnet, dass** die frei fließenden, mobilen Elemente eine Dichte zwischen 1.0 g·cm⁻³ und 5.0 g·cm⁻³ aufweisen.

8. Verfahren nach wenigstens einem der Ansprüche 1 bis 7, **dadurch gekennzeichnet, dass** die frei fließenden, mobilen Elemente einen im Vergleich zum mittleren Partikeldurchmesser der in der Wirbelschicht befindlichen Partikeln mindestens um eine Größenordnung höheren Durchmesser aufweisen.

9. Verfahren nach wenigstens einem der Ansprüche 1 bis 8, **dadurch gekennzeichnet, dass** die frei fließenden, mobilen Elemente eine kugelförmige, ellipsoide, zylinder- oder scheibenförmige, symmetrische oder unsymmetrische oder eine unregelmäßige äußere Form haben.

10. Verfahren nach wenigstens einem der Ansprüche 1 bis 9, **dadurch gekennzeichnet, dass** die frei fließenden, mobilen Elemente im Inneren massiv, porös oder hohl sind.

11. Verfahren nach wenigstens einem der Ansprüche 1 bis 10, **dadurch gekennzeichnet, dass** als Materialien für die frei fließenden, mobilen Elemente Silizium, metallische Werkstoffe, nichtmetallische Werkstoffe, keramische Werkstoffe oder Verbundwerkstoffe verwendet werden.

12. Verfahren zur Herstellung photovoltaischer Komponenten mit folgenden Verfahrensschritten:
- Herstellen von granularem Silizium nach einem der Ansprüche 1 bis 11,
- Fertigen photovoltaischer Komponenten aus dem hergestellten Silizium.

13. Verfahren zur Herstellung elektronischer Bauteile mit folgenden Verfahrensschritten:
- Herstellen von granularem Silizium nach einem der Ansprüche 1 bis 11,
- Fertigen elektronischer Bauteile aus dem hergestellten Silizium.

## Claims

1. A method for producing granular silicon by thermal decomposition of a gas containing silicon in a fluidized bed, **characterized in that** the decomposition occurs in the presence of free-flowing mobile elements, wherein
silicon being deposited on the free-flowing mobile elements during the decomposition of the gas containing silicon is removed in a separate procedural step by reacting with hydrogen halides, halogens, alkyl halogenides, aryl halogenides or combinations of halogen and/or hydrogen halide and/or oxidizing mineral acids.

2. A method for producing granular silicon by thermal decomposition of a gas containing silicon in a fluidized bed, **characterized in that** the decomposition occurs in the presence of free-flowing mobile elements, wherein
silicon being deposited on the free-flowing mobile elements during the decomposition of the gas containing silicon is removed in the separate procedural step by heating or cooling of such free-flowing mobile elements.

3. A method according to claim 1 or 2, **characterized in that** the fluidized bed consists of silicon particles with a diameter between 50 and 5000 µm, through which the introduced gas streams in a way such that the silicon particles are fluidized and a fluidized bed develops.

4. A method according to at least one of claims 1 to 3, **characterized in that** the silicic gas used is a silane.

5. A method according to at least one of claims 1 to 4, **characterized in that** the silicic gas used is SiH₄ and that the reaction is carried out at temperatures from 500 to 1400°C.

6. A method according to at least one of claims 1 to 5, **characterized in that** the streaming velocity of the introduced gas adopts values from 1 to 10 in relation to the loosening velocity.

7. A method according to at least one of claims 1 to 6, **characterized in that** the free-flowing mobile elements have a density between 1.0 g·cm⁻³ and 5.0 g·cm⁻³.

8. A method according to at least one of claims 1 to 7, **characterized in that** the free-flowing mobile elements have a diameter that is at least one order of magnitude higher than the average diameter of the particles contained in the fluidized bed.

9. A method according to at least one of claims 1 to 8, **characterized in that** the free-flowing mobile elements have a spherical, ellipsoide, cylindrical or diskoid, symmetrical or asymmetrical, or an irregular exterior form.

10. A method according to at least one of claims 1 to 9, **characterized in that** the free-flowing mobile elements have a massive, porous or hollow interior.

11. A method according to at least one of claims 1 to 10, **characterized in that** the materials used for the free-flowing mobile elements are silicon, metallic materials, non-metallic materials, ceramic materials or composite materials.

12. A method for producing photovoltaic components, comprising the following procedural steps:
- producing granular silicon according to one of claims 1 to 11,
- manufacturing photovoltaic components from the produced silicon.

13. A method of manufacturing electronic components, comprising the following procedural steps:
- producing granular silicon according to one of claims 1 to 11,
- manufacturing electronic components from the produced silicon.

## Revendications

1. Procédé de préparation de silicium granulaire par décomposition thermique d'un gaz contenant du silicium dans une couche fluidisée, **caractérisé en ce que** la décomposition est réalisée en présence d'éléments mobiles, libres, où dans une étape séparée de procédé, le silicium, qui s'est déposé pendant la décomposition du gaz contenant du silicium, sur les éléments mobiles, libres, est éliminé par réaction avec un hydrure d'halogène, un halogène, un halogénure d'alkyle, un halogénure d'aryle ou des combinaisons d'halogènes et/ou d'hydrures d'halogène et/ou d'acides minéraux oxydants.

2. Procédé de préparation de silicium granulaire par décomposition thermique d'un gaz contenant du silicium dans une couche fluidisée, **caractérisé en ce que** la décomposition est réalisée en présence d'éléments mobiles, libres, où dans une étape séparée de procédé, le silicium, qui s'est déposé pendant la décomposition du gaz contenant du silicium, sur les éléments mobiles, libres, est éliminé par refroidissement ou chauffage des éléments mobiles, libres.

3. Procédé selon la revendication 1 ou 2, **caractérisé en ce que** la couche fluidisée consiste en des particules de silicium avec un diamètre allant de 50 à 5000 µm, qui sont écoulés du gaz alimenté de sorte que les particules de silicium sont fluidisées et la couche fluidisée se forme.

4. Procédé selon au moins une des revendications 1 à 3, **caractérisé en ce que** l'on utilise comme gaz contenant du silicium, un silane.

5. Procédé selon au moins une des revendications 1 à 4, **caractérisé en ce que** l'on utilise du SiH₄ comme gaz contenant du silicium et **en ce que** l'on travaille à des températures allant de 500 à 1400°C.

6. Procédé selon au moins une des revendications 1 à 5, **caractérisé en ce que** la vitesse du courant gazeux du gaz alimenté par rapport à la vitesse de relâchement adopte une valeur de 1 à 10.

7. Procédé selon au moins une des revendications 1 à 6, **caractérisé en ce que** les éléments mobiles, libres présentent une masse spécifique allant de 1,0 g.cm⁻³ à 5,0 g.cm⁻³.

8. Procédé selon au moins une des revendications 1 à 7, **caractérisé en ce que** les éléments mobiles, libres présentent un diamètre supérieur d'au moins un ordre de grandeur par comparaison au diamètre moyen des particules se trouvant dans la couche fluidisée.

9. Procédé selon au moins une des revendications 1 à 8, **caractérisé en ce que** les éléments mobiles, libres ont une forme extérieure sphérique, ellipsoïde, cylindrique ou discoïde, symétrique ou non symétrique ou une forme non régulière.

10. Procédé selon au moins une des revendications 1 à 9, **caractérisé en ce que** les éléments mobiles, libres sont massifs, poreux ou creux.

11. Procédé selon au moins une des revendications 1 à 10, **caractérisé en ce que** comme matériaux pour les éléments mobiles, libres, on utilise du silicium, des matériaux métalliques, des matériaux non métalliques, des matériaux céramiques ou des matériaux composites.

12. Procédé de préparation de composants photovoltaïques avec les étapes suivantes du procédé :
- préparation de silicium granulaire selon l'une des revendications 1 à 11,
- formation de composants photovoltaïques à partir du silicium préparé.

13. Procédé de préparation d'éléments électroniques avec les étapes suivantes du procédé :
- préparation de silicium granulaire selon l'une des revendications 1 à 11,
- formation d'éléments électroniques à partir du silicium préparé.
